# EUROPEAN PATENT APPLICATION

(11) **EP 4 852 610 A1**
(43) Date of publication of application: **09.12.2026**
(21) Application number: 24921520.3
(22) Date of filing: 15.10.2024
(51) Int. Cl.: H04W 88/04

(54) **COMMUNICATION METHOD AND APPARATUS, COMMUNICATION NODE, STORAGE MEDIUM, AND COMPUTER PROGRAM PRODUCT**

(30) Priority: 01.02.2024 CN 202410146280
(71) Applicant: ZTE Corporation, Shenzhen, Guangdong 518057 (CN)
(72) Inventor: MA, Xiaoying, Shenzhen, Guangdong 518057 (CN); DAI, Bo, Shenzhen, Guangdong 518057 (CN); CHEN, Mengzhu, Shenzhen, Guangdong 518057 (CN); HU, Youjun, Shenzhen, Guangdong 518057 (CN); XU, Jun, Shenzhen, Guangdong 518057 (CN); YANG, Weiwei, Shenzhen, Guangdong 518057 (CN)
(74) Representative: Aipex B.V.
(86) International application number: PCT/CN2024/124892
(87) International publication number: WO 2025/161496

(57) **Abstract**

Provided are a communication method, a communication apparatus, a communication node, a storage medium, and a computer program product. The method includes receiving first signaling sent by a second communication node, where the first signaling includes information for communication with a third communication node; and sending second signaling to the third communication node, where the second signaling is related to the first signaling. This solves the problem of a limited communication distance between the second communication node and the third communication node. The first communication node serves as an intermediate node between the second communication node and the third communication node to assist communication between the second communication node and the third communication node, effectively extending the communication distance between the second communication node and the third communication node, facilitating better device application in different scenarios, and enabling the third communication node with low complexity and low power consumption to be widely used.

## Description

### TECHNICAL FIELD

The present application relates to the field of wireless communication technology, particularly a communication method, a communication apparatus, a communication node, a storage medium, and a computer program product.

### BACKGROUND

In the field of wireless communication, the communication distance between nodes is a very important issue. Using Internet of Things (IoT) applications as an example, such applications require deployment of hundreds of millions of IoT devices having small size, low complexity, and low power consumption. However, terminals with low complexity and low power consumption have a limited communication distance. Therefore, how to improve the communication distance between nodes has become a problem to be solved.

### SUMMARY

The present application provides a communication method, a communication apparatus, a communication node, a storage medium, and a computer program product to solve the problem of a limited communication distance between an Internet of Things (IoT) device and a base station.

To achieve this object, an embodiment of the present application provides a communication method applied to a first communication node. The method includes receiving first signaling sent by a second communication node, where the first signaling includes information for communication with a third communication node; and sending second signaling to the third communication node, where the second signaling is related to the first signaling.

To achieve this object, an embodiment of the present application provides a communication method applied to a second communication node. The method includes sending first signaling to a first communication node, where the first signaling includes information for communication between the first communication node and a third communication node.

To achieve this object, an embodiment of the present application provides a communication apparatus applied to a first communication node. The apparatus includes a first signaling receiving module and a second signaling sending module.

The first signaling receiving module is configured to receive first signaling sent by a second communication node. The first signaling includes signaling for communication with a third communication node.

The second signaling sending module is configured to send second signaling to the third communication node, where the second signaling is related to the first signaling.

To achieve this object, an embodiment of the present application provides a communication apparatus applied to a second communication node. The apparatus includes a first signaling sending module.

The first signaling sending module is configured to send first signaling to a first communication node, where the first signaling includes information for communication between the first communication node and a third communication node.

To achieve this object, an embodiment of the present application provides a communication node. The communication node includes a memory, a processor, a program stored in the memory and executable on the processor, and a data bus for implementation of connection and communication between the processor and the memory. When executed by the processor, the program causes the processor to perform the communication method of any embodiment of the present application.

To achieve this object, an embodiment of the present application provides a storage medium for computer-readable storage. The storage medium stores at least one program executable by at least one processor to cause the at least one processor to perform the communication method of any embodiment of the present application.

To achieve this object, an embodiment of the present application provides a computer program product. The computer program product includes a computer program which, when executed by a processor, causes the processor to perform the communication method of any embodiment of the present application.

According to the communication method, the communication apparatus, the communication node, the storage medium, and the computer program product of embodiments of the present application, the communication method includes receiving first signaling sent by a second communication node, where the first signaling includes information for communication with a third communication node; sending second signaling to the third communication node, where the second signaling is related to the first signaling; receiving third signaling fed back by the third communication node; and sending fourth signaling to the second communication node, where the fourth signaling is related to the third signaling. This solves the problem of a limited communication distance between the second communication node and the third communication node. The first communication node serves as an intermediate node between the second communication node and the third communication node to assist communication between the second communication node and the third communication node, effectively extending the communication distance between the second communication node and the third communication node, facilitating better device application in different scenarios, and enabling the third communication node with low complexity and low power consumption to be widely used.

The preceding embodiments and other aspects of the present application and implementations thereof are described in more detail in the brief description of drawings, detailed description, and claims.

### BRIEF DESCRIPTION OF DRAWINGS

FIG. 1 is a flowchart of a communication method according to an embodiment.
FIG. 2 is a flowchart of another communication method according to an embodiment.
FIG. 3 is a flowchart of another communication method according to an embodiment.
FIG. 4 is an example diagram of a window according to an embodiment.
FIG. 5 is an example diagram of another window according to an embodiment.
FIG. 6 is a diagram illustrating the structure of a communication apparatus according to an embodiment.
FIG. 7 is a diagram illustrating the structure of another communication apparatus according to an embodiment.
FIG. 8 is a diagram illustrating the structure of a communication node according to an embodiment.

### DETAILED DESCRIPTION

To make the objects, technical solutions, and advantages of the present application clearer, embodiments of the present application are described in detail below in conjunction with the drawings. It is to be noted that if not in collision, embodiments of the present application and features therein may be combined with each other in any manner.

Using communication between an Internet of Things (IoT) device and a base station as an example, uplink and downlink communication between the IoT device and the base station uses frequency division duplexing (FDD), that is, an uplink signal and a downlink signal use different frequency bands and/or frequencies. IoT devices may be classified into active devices (for example, having a battery and having energy storage) and passive devices (without a battery). Considerations in signaling design and transmission thereof may be different. Communication between the base station and the IoT device is usually used in scenarios such as inventory. In inventory, the base station sends an inventory command, and the IoT device responds to the inventory command and returns a string of random numbers. If the base station successfully receives a random number, the base station sends an ACK (including the received random number). When the IoT device receives an ACK command that is the same as its own random number, the IoT device determines that the inventory is successful and returns the protocol control (PC) and the electronic product code (EPC). The inventory may end after all IoT devices successfully complete the inventory. The IoT devices with low complexity and low power consumption have a limited communication distance.

To solve the problem of a limited communication distance, the present application provides a communication method, effectively improving the communication distance between nodes.

The first communication node may be, for example, a user equipment (UE), a terminal device, or a relay. The second communication node may be a base station. The third communication node may be an IoT device or a Bluetooth device. The IoT device may be, for example, an Ambient-IoT device or a low-power IoT device.

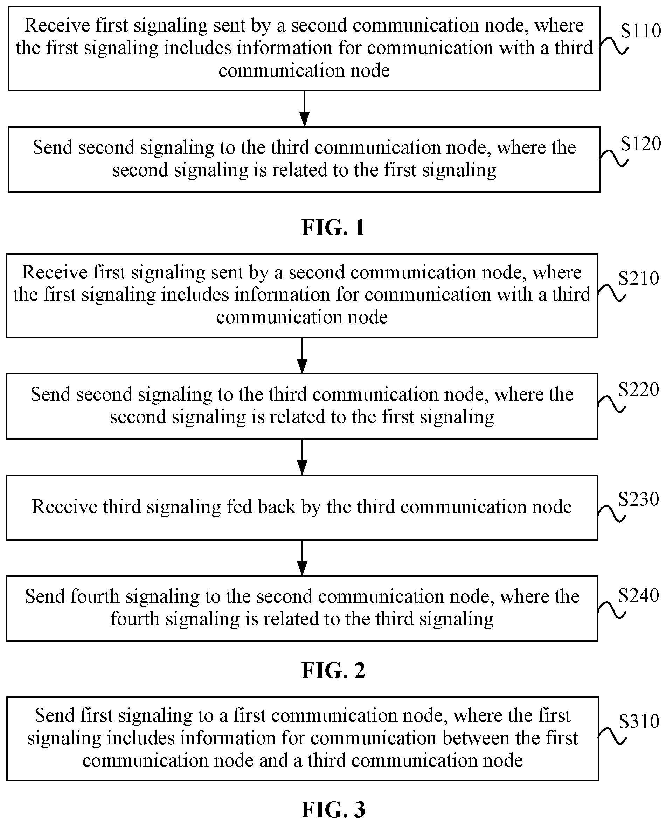

FIG. 1 is a flowchart of a communication method according to an embodiment. As shown in FIG. 1, the communication method of this embodiment of the present application is applied to a first communication node, and the method includes S110 to S140.

In S110, first signaling sent by a second communication node is received, where the first signaling includes information for communication with a third communication node.

The first signaling may be used to instruct the first communication node, as an intermediate node, to communicate with the third communication node to assist communication between the second communication node and the third communication node. The first signaling may carry information. The first signaling includes related information for communication with the third communication node. The first signaling may be used to indicate, for example, the type of information sent by the second communication node to the third communication node and how to send information to the third communication node.

The first communication node is able to communicate with the second communication node. When the second communication node is required to communicate with the third communication node, the second communication node generates the first signaling according to information such as the content required for communication and the information type and sends the first signaling to the first communication node. The first communication node receives the first signaling based on the communication mode negotiated with the second communication node.

In the present application, the first communication node and the second communication node may form a first system for communication, the air interface between the first communication node and the second communication node is a first air interface, the transmission mode between the first communication node and the second communication node is a first transmission mode, and the transmission link between the first communication node and the second communication node is a first transmission link. Moreover, the first communication node and the third communication node may form a second system for communication, the air interface between the first communication node and the third communication node is a second air interface, the transmission mode between the first communication node and the third communication node is a second transmission mode, and the transmission link between the first communication node and the third communication node is a second transmission link.

In some embodiments, the first signaling carries at least one of the following: inventory information, read information, write information, select information, a trigger command, a paging command, a scheduling command, an access command, wake-up information, or an indication for activating the first communication node as an intermediate node.

The information for communication with the third communication node included in the first signaling may also include a command or information for triggering communication between the first communication node and the third communication node.

The first message may also carry at least one of the following: a start time for communication between the first communication node and the third communication node, resources (frequency points) for communication between the first communication node and the third communication node, an IoT-Preamble sequence, an IoT sequence type, related information in the second signaling, indication of a waveform or modulation scheme of transmission from the first communication node to the third communication node, the number of repetitions of transmissions from the first communication node to the third communication node, a frequency-domain position of transmission from the first communication node to the third communication node, a power indication of transmission from the first communication node to the third communication node, or related information of a fourth message (for example, a preamble sequence).

The first signaling may be a Non-Access Stratum (NAS) message or a Radio Resource Control (RRC) message, or downlink control information (DCI), or a medium access control control element (MAC CE), or layer-1 signaling, or small data signaling. For example, the first signaling is in different formats when carrying different information. By way of example, when the first signaling carries an inventory command or an access command, the first signaling is RRC signaling (for example, RRC release signaling or signaling specifically indicating communication between the first communication node and the third communication node, or new RRC signaling); and when the first signaling carries a read command or a write command, the first signaling is DCI, or MAC CE, or layer-1 signaling.

In S120, second signaling is sent to the third communication node, where the second signaling is related to the first signaling.

The second signaling is used to instruct the third communication node to perform related operations, for example, an inventory operation and an operation of reporting collected data and information.

The first communication node generates the second signaling according to the indication of the received first signaling, for example, determining an operation to be performed, according to the first signaling and generating the second signaling according to the operation to be performed. The first communication node sends the second signaling to the third communication node according to the communication mode negotiated with the third communication node.

In some embodiments, the first signaling indicates the first communication node that the related operations include an inventory operation, and the first signaling includes information required for the inventory. The first communication node sends the second signaling to the third communication node according to the first signaling, where the second signaling carries an inventory command.

In some embodiments, the second signaling includes multiple pieces of signaling. The multiple pieces of signaling are sent at different times. The multiple pieces of signaling may be used to instruct one third communication node to perform different operations or instruct different third communication nodes to perform the same or different operations.

The communication method of this embodiment of the present application solves the problem of a limited communication distance between the second communication node and the third communication node. The first communication node serves as an intermediate node between the second communication node and the third communication node to assist communication between the second communication node and the third communication node, effectively extending the communication distance between the second communication node and the third communication node, facilitating better device application in different scenarios, and enabling the third communication node with low complexity and low power consumption to be widely used.

FIG. 2 is a flowchart of a communication method according to an embodiment. As shown in FIG. 2, the communication method of this embodiment of the present application is applied to a first communication node, and the method includes S210 to S240.

In S210, first signaling sent by a second communication node is received, where the first signaling includes information for communication with a third communication node.

In S220, second signaling is sent to the third communication node, where the second signaling is related to the first signaling.

In S230, third signaling fed back by the third communication node is received.

The third signaling is used for the third communication node to feed back corresponding information to the first communication node. The third signaling may be an execution result of performing a corresponding operation according to the second signaling or may be related information fed back according to the second signaling. After receiving the second signaling, the third communication node may perform a corresponding operation and after completing the operation, generate the third signaling according to the execution result and feed back the third signaling to the first communication node. The first communication node receives the third signaling based on the communication mode between the first communication node and the third communication node.

In S240, fourth signaling is sent to the second communication node, where the fourth signaling is related to the third signaling.

The fourth signaling is used to feed back corresponding information to the second communication node. The fourth signaling is determined according to the third signaling. After receiving the third signaling, the first communication node analyzes the third signaling, for example, whether the third communication node operates normally, the state of the third communication node, operating parameters, and specific collected data, and generates the fourth signaling according to the analysis result, or directly uses the information carried in the third signaling as information in the fourth signaling to generate the fourth signaling.

After completing the work/operation/content indicated in the first signaling, the first communication node may send feedback information/signaling to the second communication node. The feedback information may be carried in the fourth signaling, or the first communication node may send an additional new signaling to carry the feedback information.

By way of example, the third signaling sent by the third communication node includes identifier (ID) information of the communication node, and the fourth signaling sent by the first communication node includes the same ID information.

In some embodiments, information carried in the fourth signaling includes information carried in the third signaling.

In some embodiments, information carried in the fourth signaling includes information carried in multiple pieces of third signaling.

In some embodiments, information carried in the fourth signaling includes information carried in third signaling sent by multiple third communication nodes.

In some embodiments, the time/condition for sending the fourth signaling includes one or more of the following:
after receiving one piece of/multiple pieces of/specific third signaling;
one third communication node completes inventory/paging/access;
one third communication node completes indication of the second signaling;
multiple third communication nodes complete inventory/paging/access;
multiple third communication nodes complete indication of the second signaling;
third communication nodes indicated in all of the first signaling/second signaling complete inventory/paging/access; and
third communication nodes indicated in all of the first signaling/second signaling complete indication of the second signaling.

In some embodiments, multiple pieces of second signaling and third signaling are transmitted between the first signaling and the fourth signaling. In some embodiments, second signaling and third signaling for communication with multiple third communication nodes are transmitted between the first signaling and the fourth signaling.

In some embodiments, different pieces of signaling may be sent/received after a certain time interval or response time.

In some embodiments, the second signaling is transmitted after a first effective time (or response time) following the first signaling. For example, the second signaling is transmitted immediately after the first effective time (or response time) following the first signaling, or the second signaling is transmitted at least after the first effective time (or response time) following the first signaling.

In some embodiments, the third signaling is transmitted after a second effective time (or response time) elapses following the second signaling. For example, the third signaling is transmitted immediately after the second effective time (or response time) elapses following the second signaling, or the third signaling is transmitted at least after the second effective time (or response time) elapses following the second signaling.

In some embodiments, the fourth signaling is transmitted after a third effective time (or response time) elapses following the third signaling. For example, the fourth signaling is transmitted immediately after the third effective time (or response time) elapses following the third signaling, or the fourth signaling is transmitted at least after the third effective time (or response time) elapses following the third signaling.

In some embodiments, the second signaling completes transmission before a first predefined time elapses following the first signaling.

In some embodiments, the third signaling completes transmission before a second predefined time elapses following the second signaling.

In some embodiments, the fourth signaling completes transmission before a third predefined time elapses following the third signaling.

In some embodiments, at least one of the following is related to the UE capability: the first effective time, the second effective time, the third effective time, the first predefined time, the second predefined time, or the third predefined time.

Optionally, being related to the UE capability indicates that the time is indicated by the UE capability. Optionally, being related to the UE capability indicates that the determination of the time is related to the UE capability. For example, the UE capability indicates the minimum value, and the time cannot be smaller than the minimum value.

The first signaling, the second signaling, the third signaling, and the fourth signaling may be signaling or signals.

When the first communication node, as an intermediate node, assists the second communication node and the third communication node, a service in a first system of the first communication node and a service in a second system of the intermediate node are required to be jointly considered.

In some embodiments, the method also includes: after entering a first time period, performing one or more of the following operations: stopping all communication with the second communication node; maintaining partial communication with the second communication node; maintaining all communication with the third communication node; and maintaining partial communication with the third communication node.

The first time period may be understood as a time period or a communication time window. Within this time period, the first communication node may stop communication with the second communication node or the third communication node; or, the first communication node may maintain only partial communication with the second communication node or the third communication node. The first communication node, during the process in which the first communication node serves as an intermediate node to assist communication between the second communication node and the third communication node, may pre-configure information and conditions and determine, based on the configured information and conditions, whether to enter the first time period. After entering the first time period, the first communication node may maintain (or stop) partial communication with the second communication node, or may stop all communication with the second communication node, or may maintain (or stop) partial communication with the third communication node, or may maintain all communication with the third communication node.

Stopping (or interrupting) all communication between the first communication node and the second communication node may be stopping all uplink communication and/or stopping all downlink communication, so as to implement dynamic switching/adaptation between the first system and the second system, save energy consumption of the first communication node, and reduce complexity of the first communication node.

Maintaining (or stopping) partial communication between the first communication node and the second communication node may be maintaining (or stopping) partial uplink communication and/or maintaining (or stopping) partial downlink communication, so as to implement dynamic switching/adaptation between the first system and the second system, save energy consumption of the first communication node, reduce complexity of the first communication node, ensure communication performance between the first communication node and the second communication node, and enable smooth switching between the first system and the second system, that is, smooth switching of communication with the second communication node and the third communication node.

In some embodiments, the method also includes during communication with the third communication node, performing one or more of the following operations: stopping all communication with the second communication node; and maintaining partial communication with the second communication node.

In some embodiments, a period of communication between the first communication node and the third communication node is a first time period.

During communication with the third communication node, the first communication node is in the first time period. In the first time period, the first communication node may perform one or more of the following operations: stopping all communication with the second communication node, maintaining partial communication with the second communication node, maintaining all communication with the third communication node, and maintaining partial communication with the third communication node.

In some embodiments, during communication with the third communication node, the first communication node is in one of the following states: an idle state; an inactive state; an inactive time state of a discontinuous reception; outside DRX active time state; or a connected state. The idle state is an idle state, the inactive state is an inactive state, the inactive time state of a discontinuous reception is an outside DRX active time state.

In some embodiments, the method also includes during communication with the third communication node, performing one or more of the following operations: monitoring part of a physical downlink control channel; performing part of measurement; reporting part of measurement results; stopping monitoring of the physical downlink control channel; stopping the measurement; and stopping measurement result reporting.

The measurement may be, for example, synchronization signal/PBCH block (SSB) measurement or channel state information reference signal (CSI-RS) measurement. During communication with the third communication node, the part of the physical downlink control channel monitored by the first communication node may be the part of the physical downlink control channel used for the second communication node to send information to the first communication node. The type of measurement that the first communication node may perform during communication with the third communication node may be predefined, preconfigured based on services, or indicated via signaling. The measurement result may be reported in real time or reported after a certain condition is satisfied.

In some embodiments, the method also includes before entering the first time period, performing one or more of the following operations: triggering the first time period after satisfying a first condition; and determining the position of the first time period according to configuration information of the first time period.

The first condition may be set according to, for example, the type, quantity, and time of transmitted and received information. The configuration information may be, for example, configured time information or period information.

The first condition and/or the configuration information of the first time period are preset. The configuration information of the first time period may be configured by RRC or predefined. Whether the first condition is satisfied is detected, and if the first condition is satisfied, the first time period may be determined to be triggered. After entering the first time period, the first communication node performs corresponding operations. The configuration information of the first time period is analyzed. The position of the first time period is determined according to the configuration information. For example, the configuration information indicates triggering at time t1 and entering the first time period. The first time period may also be configured, via the configuration information, to occur periodically.

In some embodiments, the first time period becomes effective after being configured.

In some embodiments, the method also includes communicating with the third communication node after satisfying a first condition.

After the first condition is set, if it is detected that the first condition is satisfied, the first communication node communicates with the third communication node.

In some embodiments, the first condition includes one or more of the following:
receiving the first signaling sent by the second communication node;
after a first effective time following receiving the first signaling sent by the second communication node;
after receiving the first signaling sent by the second communication node, entering an idle state or an inactive state;
after sending the second signaling;
a third effective time elapses after sending the second signaling;
after receiving the first signaling sent by the second communication node, sending feedback information to the second communication node;
a fifth effective time elapses after receiving the first signaling sent by the second communication node and sending feedback information to the second communication node;
after receiving the first signaling sent by the second communication node, receiving radio resource control release signaling sent by the second communication node;
receiving the first signaling sent by the second communication node, where the first signaling is carried in the radio resource control release signaling; and
receiving the first signaling sent by the second communication node, where the first signaling indicates radio resource control release information.

The feedback information may be acknowledgment information to indicate that the first communication node has received the first signaling.

In some embodiments, the feedback information includes at least one of the following: an ACK, or a time interval between sending the second signaling and the feedback information.

The Radio Resource Control release signaling is RRC release signaling. After sending the first signaling to the first communication node, the second communication node may also send the Radio Resource Control release signaling. When sending the first signaling to the first communication node, the second communication node may carry the first signaling in the Radio Resource Control release signaling. When sending the first signaling to the first communication node, the second communication node may implicitly indicate the Radio Resource Control release information through the first signaling.

In some embodiments, the length of the first time period is determined according to content indicated by the first signaling. That is, different first signaling may trigger first time periods with different lengths.

In some embodiments, after receiving a first type of first signaling, the first communication node enters the idle state/inactive state. After receiving a second type of first signaling, the first communication node remains in the RRC connected state.

In some embodiments, after receiving a first type of first signaling, the first communication node enters the idle state/inactive state. After receiving a second type of first signaling, the first communication node remains in the RRC connected state. If Connected-Discontinuous Reception (CDRX) is configured, the first communication node is in the outside CDRX active time state. Being in the outside CDRX active time state indicates operating according to the behavior mode of the outside CDRX active time state.

In some embodiments, after receiving a first type of first signaling, the first communication node enters the idle state/inactive state. After receiving a second type of first signaling, the first communication node remains in the RRC connected state, and the first communication node is in the outside CDRX active time state. Being in the outside CDRX active time state indicates operating according to the behavior mode of the outside CDRX active time state.

In some embodiments, the first type of first signaling is first signaling including first-type information, and the second type of first signaling is first signaling including second-type information.

In some embodiments, the first signaling is carried in the Radio Resource Control release signaling; or the first signaling indicates the Radio Resource Control release information.

In some embodiments, the first signaling indicates the Radio Resource Control release signaling, where the first signaling includes the first-type information.

The first signaling carrying the first-type information implicitly indicates the RRC release signaling. That is, the first signaling carrying the first-type information implicitly indicates the RRC release.

In some embodiments, the first-type information includes at least one of the following: an inventory command, an access command, or a paging command.

In some embodiments, the first signaling carrying the second-type information does not implicitly indicate the RRC release signaling. That is, the first signaling carrying the second-type information does not implicitly indicate the RRC release.

In some embodiments, the second-type information includes at least one of the following: a read command, a write command, or ACK information.

In some embodiments, the first-type information is information for multiple third communication nodes, and the first-type information does not indicate a specific second communication node.

In some embodiments, the second-type information is information for one or more specific IoT devices.

In some embodiments, when the first signaling includes an inventory/access command, the first signaling implicitly indicates the RRC release.

In some embodiments, when the first signaling includes a read/write command, the first signaling does not implicitly indicate the RRC release.

In some embodiments, the method also includes one of the following: ending a first time period after satisfying a second condition; stopping communication with the third communication node after satisfying a second condition; or communicating with the second communication node after satisfying a second condition.

In this embodiment, the second condition may be understood as a preset condition to indicate whether to end the first time period or to indicate whether to start communication with the second communication node. The second condition may be set according to, for example, the signaling sent and received, channel quality, time of the first time period. The second condition is preset. Whether the second condition is satisfied is detected. If the second condition is satisfied, the first time period ends, or the first communication node exits interruption or stops communication with the third communication node, or the first communication node communicates with the second communication node. Communication between the first communication node and the second communication node may be resuming communication with the second communication node or starting communication with the second communication node.

In some embodiments, the second condition includes one or more of the following: sending fourth signaling; receiving third signaling; after a predefined time; a communication quality measurement result not satisfying a condition; a channel quality measurement result not satisfying a condition; the second communication node being out of synchronization; completing inventory; within a period of time, not receiving signaling sent by the third communication node; and receiving an indication of fifth signaling.

The predefined time may be set according to, for example, the type of the third communication node, parameters of the third communication node, or the service type. Whether the predefined time expires may be determined by timing of a timer. When the timer expires, it is determined that the predefined time expires. The predefined time may be configured time in a first time window or time defined by window configuration. If the communication quality is measured, and the communication quality is poor or the signal to interference plus noise ratio (SINR) or reference signal receiving power (RSRP) is lower than a threshold, it may be determined that the communication quality measurement result does not satisfy the condition. If the channel quality is measured, and the channel quality is poor or the channel quality indicator (CQI) is lower than a threshold, it may be determined that the channel quality measurement result does not satisfy the condition. The fifth signaling may be sent by the second communication node to the first communication node. The fifth signaling includes information instructing the first communication node to end the first time period or to start communication with the second communication node. The first communication node not receiving signaling sent by the third communication node within a period of time indicates that no response from the third communication node is received within this period of time, where this signaling may be the third signaling or other signaling.

In some embodiments, the second condition includes one or more of the following: sending a scheduling request; sending message 1; sending message A; performing random access; sending a buffer status report; and sending sixth signaling.

Message 1 is Msg1. Message A is MsgA. The sixth signaling is used to indicate that the first communication node resumes the interrupted (or stopped) communication. The sixth signaling may be sent to the second communication node and/or the third communication node to indicate that the first communication node resumes communication with the second communication node and/or resumes communication with the third communication node.

In some embodiments, after one or more of the following operations are satisfied, the first communication node starts communication with the second communication node.

The one or more operations include: sending a scheduling request; sending message 1; sending message A; performing random access; sending a buffer status report; and sending sixth signaling.

In some embodiments, the first time period is periodic, semi-persistent, or aperiodically triggered.

The first time period may appear periodically; or may be semi-persistent; that is, the first time period is required to be triggered and after being triggered, appears periodically; or the first time period may be aperiodically triggered and appears only once or N times after being triggered. N is a positive integer greater than 1 and less than 20.

The first condition may be used as a triggering condition for semi-persistent and aperiodic trigger. After the first time period is triggered by the first condition, the first time period may appear periodically or appear once or N times. The first time period, when configured based on configuration information, may be directly configured as periodic. After completion of the configuration, the first time period takes effect and periodically occurs according to the configuration.

The first time period may be configured as periodic, semi-persistent, or aperiodically triggered according to the service.

Optionally, whether the first time period appears periodically after being triggered or appears only once or N times after being triggered may be determined according to the content indicated in the first signaling. For example, if the first signaling indicates a periodic service, a periodic first time period is triggered; and if the first signaling indicates an aperiodic service, the first time period is triggered to appear once or N times.

In some embodiments, the method also includes communicating with the second communication node within a window according to a first configuration; and communicate with the second communication node outside the window according to a second configuration.

The window may be predefined or configured by signaling. The first configuration and the second configuration are, for example, configured resources and information. The window is preset or configured. The first configuration and the second configuration are configured. During the period in which the first communication node, as an intermediate node, assists communication between the third communication node and the second communication node, the first communication node communicates with the second communication node within the window according to resources or information configured by the first configuration and communicates with the second communication node outside the window according to resources or information configured by the second configuration.

In some embodiments, the first configuration is a first configuration resource. The first configuration resource includes one or more of the following: a configured first search space; a configured first control resource set; configured first semi-persistent scheduling; a configured first grant; a configured first channel state information reference signal; a configured first channel sounding reference signal; a configured first physical uplink control channel; a configured first downlink control signaling format; and a configured first synchronization signal block.

In some embodiments, the second configuration is a second configuration resource. The second configuration resource includes one or more of the following: a configured second search space; a configured second control resource set; configured second semi-persistent scheduling; a configured second grant; a configured second channel state information reference signal; a configured second channel sounding reference signal; a configured second physical uplink control channel; a configured second downlink control signaling format; and a configured second synchronization signal block.

In some embodiments, the first configuration resources may be different from the second configuration resources.

In some embodiments, the first configuration resources may be a subset of the second configuration resources.

In some embodiments, the method also includes communicating with the third communication node within a window; and stopping communication with the third communication node outside the window.

During the period in which the first communication node, as the intermediate node, assists communication between the third communication node and the second communication node, the first communication node may communicate with the third communication node within a specific window; and the first communication node stops communication with the third communication node outside the window.

In some embodiments, configuration information of the window is indicated by signaling, or preconfigured, or predefined.

The window may be determined according to the configuration information. The configuration information may be indicated by signaling. For example, the second communication node generates the configuration information and sends the configuration information to the first communication node, and the configuration information of the window is determined according to signaling indication, thereby implementing configuration of the window, and the configuration of the window may be modified through signaling. Alternatively, the configuration information may be pre-configured, for example, configured when parameter information of the first communication node is configured, and reconfigured when adjustment is required. Alternatively, the configuration information may be predefined, for example, defined when the first communication node is manufactured or put into use and not modified subsequently.

In some embodiments, the configuration information of the window is indicated by signaling in the following manner: the configuration information of the window is indicated by first signaling, or higher-layer signaling, or layer-1 signaling. The higher-layer signaling refers to MAC CE signaling or RRC signaling.

In some embodiments, communicating with the third communication node within the window includes receiving or sending data within the window according to a configured resource position.

A dedicated resource position may be pre-configured, for example, configured through RRC. When the first communication node communicates with the third communication node within the window, the first communication node receives or sends data according to the configured dedicated resource position.

In some embodiments, the configured resource position includes one or more of the following: a configured search space; a configured control resource set; configured semi-persistent scheduling; a configuration of a configured grant; a configured channel state information reference signal; a configured channel sounding reference signal; a configured physical uplink control channel; a configured downlink control signaling format; and a configured synchronization signal block.

In some embodiments, after stopping communication with the third communication node outside the window, the method also includes communicating with the second communication node outside the window.

Outside the window, the first communication node stops communication with the third communication node, and the first communication node communicates with the second communication node.

In some embodiments, after communicating with the third communication node within the window, the method also includes stopping all communication with the second communication node; or maintaining partial communication with the second communication node.

Within the window, the first communication node communicates with the third communication node, and the first communication node stops or interrupts all communication with the second communication node or maintains partial communication with the second communication node, that is, when the first communication node communicates with the third communication node, the first communication node stops all or part of communication with the second communication node.

In some embodiments, the method also includes in response to maintaining partial communication with the second communication node, receiving first-type downlink signaling sent by the second communication node and/or sending first-type uplink signaling to the second communication node.

During maintaining partial communication with the second communication node, the first communication node may receive the first-type downlink signaling sent by the second communication node but does not receive other types of downlink signaling; and/or may send the first-type uplink signaling to the second communication node but does not send other types of uplink signaling.

In some embodiments, the first-type downlink signaling includes one or more of the following: a synchronization signal block; a system information block; a specific system information block; paging downlink control signaling; and a paging physical downlink shared channel. The first-type uplink signaling includes one or more of the following: message 1; message A; a scheduling request; signaling related to random access information; and a periodic channel state information report.

In some embodiments, the window appears periodically according to the period of the window.

When the window is defined, the period of the window may be defined. The window appears periodically according to the defined period. The interval between adjacent windows is the value of the period.

In some embodiments, the method also includes in response to the second signaling conflicting with first uplink signaling, comparing the priority level of the second signaling and the priority level of the first uplink signaling to determine signaling with a higher priority level; and sending the signaling with the higher priority level.

The first uplink signaling is uplink signaling sent when the first communication node communicates with the second communication node.

In this embodiment, the first uplink signaling may be uplink signaling sent when the first communication node and the second communication node perform normal service transmission. Priority levels of different pieces of signaling are preset. When the second signaling conflicts with the first uplink signaling, priority levels of the second signaling and the first uplink signaling are determined, the priority levels are compared, and the signaling with the higher priority level is determined and sent. The signaling with the higher priority level may be the second signaling or the first uplink signaling.

In some embodiments, the method also includes in response to third signaling conflicting with first downlink signaling, comparing the priority level of the third signaling and the priority level of the first downlink signaling to determine signaling with a higher priority level; and monitoring or receiving the signaling with the higher priority level.

The first downlink signaling is downlink signaling sent when the first communication node communicates with the second communication node.

In this embodiment, the first downlink signaling may be downlink signaling sent when the first communication node and the third communication node perform normal service transmission. When the third signaling conflicts with the first downlink signaling, priority levels of the third signaling and the first downlink signaling are determined, the priority levels are compared, and the signaling with the higher priority is determined and monitored or received. The signaling with the higher priority may be the third signaling or the first downlink signaling.

In some embodiments, the information for communication with the third communication node includes at least one of the following: inventory information; scheduling information; access information; wake-up information; indication information for activating the first communication node as an intermediate node; a start time of communication between the first communication node and the third communication node; resources for communication between the first communication node and the third communication node; indication of a waveform or modulation scheme of transmission from the first communication node to the third communication node; the number of repetitions of transmissions from the first communication node to the third communication node; a frequency-domain position of transmission from the first communication node to the third communication node; or a power indication of transmission from the first communication node to the third communication node.

In some embodiments, the third signaling is sent by the third communication node by using a backscatter or amplitude shift keying (ASK) method.

In some embodiments, the second signaling is sent using an amplitude shift keying method.

In some embodiments, the first signaling is sent by the second communication node through at least one of the following: a non-access stratum message, a radio resource control message, downlink control information, a media access control control element, layer-1 signaling, or small data signaling.

In some embodiments, the third signaling is encoded by the third communication node by using FM0 encoding, or Miller encoding, or Manchester encoding, or convolutional coding, or polar coding. In some embodiments, the third signaling is sent by the third communication node by using frequency shift keying (FSK) or phase shift keying (PSK). In some embodiments, the second signaling uses pulse interval encoding (PIE) or Manchester encoding.

The communication method of this embodiment of the present application solves the problem of a limited communication distance between the second communication node and the third communication node. The first communication node serves as an intermediate node between the second communication node and the third communication node to assist communication between the second communication node and the third communication node, effectively extending the communication distance between the second communication node and the third communication node, facilitating better device application in different scenarios, and enabling the third communication node with low complexity and low power consumption to be widely used. Moreover, the communication method of this embodiment of the present application comprehensively considers the transmission mode of the service of the first communication node and the transmission mode of the service forwarded by the intermediate node. By configuring a first time period, adaptive switching of the communication node is achieved, thereby reducing power consumption, simplifying the complexity of the first communication node, and ensuring the communication performance of the first communication node.

FIG. 3 is a flowchart of a communication method according to an embodiment. As shown in FIG. 3, the communication method of this embodiment of the present application is applied to a second communication node, and the method includes S310.

In S310, first signaling is sent to a first communication node, where the first signaling includes information for communication between the first communication node and a third communication node.

During communication between the second communication node and the third communication node, the second communication node generates the first signaling and sends the first signaling to the first communication node as an intermediate node and achieves communication with the third communication node with the assistance of the first communication node.

The communication method of this embodiment of the present application solves the problem of a limited communication distance between the second communication node and the third communication node. The first communication node serves as an intermediate node between the second communication node and the third communication node to assist communication between the second communication node and the third communication node, effectively extending the communication distance between the second communication node and the third communication node, facilitating better device application in different scenarios, and enabling the third communication node with low complexity and low power consumption to be widely used.

In some embodiments, the method also includes after satisfying a first condition, performing one or more of the following operations: stopping all communication with the first communication node; stopping sending part of downlink control information; stopping sending part of measurement reference signals; stopping receiving part of measurement result reports; stopping sending the downlink control information; stopping sending the measurement reference signals; stopping receiving the measurement result reports; and maintaining partial communication with the first communication node.

In some embodiments, the first condition includes one or more of the following:
the first communication node receives the first signaling;
after a first effective time following the first communication node receiving the first signaling;
the first communication node receives the first signaling and enters an idle state or an inactive state;
after the first communication node sends the second signaling;
a third effective time elapses after the first communication node sends the second signaling;
the first communication node receives the first signaling and sends feedback information to the second communication node;
a fifth effective time elapses after the first communication node receives the first signaling and sends feedback information to the second communication node;
the first communication node receives the first signaling and receives radio resource control release signaling;
the first communication node receives the first signaling, where the first signaling is carried in the radio resource control release signaling; and
the first communication node receives the first signaling, where the first signaling indicates radio resource control release information.

In some embodiments, the method also includes communicating with the first communication node within a window by using a first configuration; and communicating with the first communication node outside the window by using a second configuration.

In some embodiments, the first configuration is a first configuration resource. The first configuration resource includes one or more of the following: a configured first search space; a configured first control resource set; configured first semi-persistent scheduling; a configured first grant; a configured first channel state information reference signal; a configured first channel sounding reference signal; a configured first physical uplink control channel; a configured first downlink control signaling format; and a configured first synchronization signal block.

In some embodiments, the second configuration is a second configuration resource. The second configuration resource includes one or more of the following: a configured second search space; a configured second control resource set; configured second semi-persistent scheduling; a configured second grant; a configured second channel state information reference signal; a configured second channel sounding reference signal; a configured second physical uplink control channel; a configured second downlink control signaling format; and a configured second synchronization signal block.

In some embodiments, the method also includes in response to maintaining partial communication with the first communication node, sending first-type downlink signaling to the first communication node and/or receiving first-type uplink signaling sent by the first communication node.

In some embodiments, the first-type downlink signaling includes one or more of the following: a synchronization signal block; a system information block; a specific system information block; paging downlink control signaling; and a paging physical downlink shared channel. The first-type uplink signaling includes one or more of the following: message 1; message A; a scheduling request; signaling related to random access information; and a periodic channel state information report.

In some embodiments, the method also includes receiving fourth signaling sent by the first communication node, where the fourth signaling includes information returned by the third communication node.

In some embodiments, the first signaling is sent through at least one of the following: a non-access stratum message, a radio resource control message, downlink control information, a media access control control element, layer-1 signaling, or small data signaling.

Using an example in which the first communication node is a user equipment (UE), the second communication node is a base station, and the third communication node is an IoT device, the communication process is described using the following embodiments.

### Embodiment one

When the UE, as an intermediate node, is used to assist communication between the IoT device and the base station, the UE (as a terminal) interrupts (or stops) communication with the base station during a period of time (a first time period). During this period of time, the UE communicates with the IoT device. The detailed description is as follows.

For the configuration of the first time period, reference may be made to embodiment six.

In some embodiments, after receiving the first signaling sent by the base station, the UE (as a terminal) interrupts communication with the base station.

In some embodiments, after a first effective time following the UE receiving the first signaling sent by the base station, the UE (as a terminal) interrupts communication with the base station.

In some embodiments, the UE receives the first signaling sent by the base station, and after sending feedback information to the base station, the UE (as a terminal) interrupts communication with the base station.

In some embodiments, the UE receives the first signaling sent by the base station, and after a second effective time following the UE sending feedback information to the base station, the UE (as a terminal) interrupts communication with the base station.

In some embodiments, after receiving the first signaling sent by the base station, the UE starts communication with the IoT device.

In some embodiments, after a first effective time following the UE receiving the first signaling sent by the base station, the UE starts communication with the IoT device.

In some embodiments, the UE receives the first signaling sent by the base station, and after sending feedback information to the base station, the UE starts communication with the IoT device.

In some embodiments, the UE receives the first signaling sent by the base station, and after a second effective time following the UE sending feedback information to the base station, the UE starts communication with the IoT device.

The feedback information includes at least one of ACK or a time interval between sending the second signaling and the feedback information.

In some embodiments, after sending the first signaling, the base station also sends RRC release signaling. The RRC release signaling instructs the UE to return to an idle/inactive state.

In some embodiments, when the UE is in the idle/inactive state, the UE is in an extended discontinuous reception (eDRX) state/uses eDRX configuration. That is, the UE is in the idle/inactive state and applies the eDRX configuration, that is, performs monitoring, measurement, or reporting according to the eDRX configuration.

Being in the eDRX state/using the eDRX configuration means that the UE transmits and receives signaling (for example, first air-interface signaling) in accordance with eDRX requirements.

After the UE receives the RRC release signaling, the UE (as a terminal) interrupts (or stops) communication with the base station (or referred to as communication with the first system/air interface/link).

After a fourth effective time following the UE receiving the RRC release signaling, the UE (as a terminal) interrupts communication with the base station.

After the UE receives the RRC release signaling, the UE starts communication with the IoT device (or referred to as communication with the second system/air interface/link).

After a fourth effective time following the UE receiving the RRC release signaling, the UE starts communication with the IoT device (or referred to as communication with the second system/air interface/link).

In some embodiments, the first signaling is carried in the RRC release signaling.

In some embodiments, the first signaling implicitly indicates the RRC release signaling, that is, the first signaling implicitly indicates the RRC release.

In some embodiments, the first signaling carrying the first-type information implicitly indicates the RRC release signaling, that is, the first signaling carrying the first-type information implicitly indicates the RRC release. The first signaling carrying the second-type information does not implicitly indicate the RRC release signaling; that is, the first signaling carrying the second-type information does not implicitly indicate the RRC release.

The first-type information includes at least one of an inventory command, an access command, or a paging command.

The second-type information includes at least one of a read command, a write command, or ACK information.

The first-type information is information for multiple IoT devices. The first-type information does not indicate a specific IoT device.

The second-type information is information for one or more specific IoT devices.

For example, when the first signaling includes an inventory/access command, the first signaling implicitly indicates the RRC release. For another example, when the first signaling includes a read/write command, the first signaling does not implicitly indicate the RRC release.

In some embodiments, after a third effective time following the UE sending the second signaling, the UE (as a terminal) interrupts communication with the base station.

In some embodiments, after sending the second signaling, the UE (as a terminal) interrupts communication with the base station.

The UE (as a terminal) interrupts communication with the base station or starts communication with the third communication node in at least one of the following manners:
The UE does not send uplink signaling to the base station, does not receive (that is, stops monitoring/receiving) the downlink signaling sent by the base station, and does not perform measurement;
The UE does not send uplink signaling to the base station, does not receive the downlink signaling sent by the base station, and may perform SSB measurement (for example, for radio resource management (RRM));
The UE does not monitor PDCCH, does not send uplink signaling to the base station, and may perform SSB measurement (for example, for RRM); or
The UE does not monitor PDCCH other than paging, does not send uplink signaling to the base station, and may perform SSB measurement (for example, for RRM).

The uplink signaling is sent by the UE to the base station. For example, the uplink signaling may be a sounding reference signal (SRS), a physical uplink shared channel (PUSCH), a physical uplink control channel (PUCCH), an ACK, a negative ACK (NACK), a scheduling request (SR), a buffer status report (BSR), or a channel state information (CSI) report.

The downlink signaling is sent by the base station to the UE. For example, the downlink signaling may be downlink control information (DCI), a physical downlink control channel (PDCCH), a physical downlink shared channel (PDSCH), a channel state information reference signal (CSI-RS), a synchronization signal block (SSB), or a system information block (SIB).

The UE (as a terminal) ends the interruption of the communication with the base station; or the UE ends the communication with the IoT device after satisfying a second condition.

The second condition includes at least one of the following: The UE sends fourth signaling, the UE receives third signaling, a timer expires, a predefined time elapses, a measurement result does not satisfy a condition, or the UE receives an indication of fifth signaling.

In some embodiments, the fifth signaling is SIB signaling.

In some embodiments, the SIB carries indication information indicating fallback/stop/deactivation/prohibition of communication with the third communication node.

In some embodiments, the SIB carries information triggering the UE to perform random access.

In some embodiments, the SIB carries system information update information.

In some embodiments, the SIB carries an indication instructing the UE to activate or revert to communication with the second communication node.

In some embodiments, the fifth signaling is a paging message.

In some embodiments, the fifth signaling is paging DCI/paging PDSCH, that is, the fifth signaling is paging DCI/paging PDSCH.

When the interruption of communication between the UE as a terminal and the base station ends, the UE is capable of sending/receiving signaling that is not allowed to be sent/received during the interruption.

When the interruption of communication between the UE as a terminal and the base station ends, the UE stops, deactivates, or prohibits communication with the third communication node.

When the interruption of communication between the UE as a terminal and the base station ends, the UE activates or reverts to communication with the second communication node.

When the interruption of communication between the UE as a terminal and the base station ends, random access of the UE is triggered.

### Embodiment two

When the UE, as an intermediate node, is used to assist communication between the IoT device and the base station, the UE interrupts partial communication with the base station during a period of time (a first time period). For the configuration of the first time period, reference may be made to embodiment six.

In some embodiments, the UE interrupts partial communication with the base station.

In some embodiments, the UE maintains partial communication with the base station.

In some embodiments, after the UE sends the second signaling/signal, the UE (as a terminal) interrupts communication with the base station.

In some embodiments, after the UE sends the second signaling/signal, the UE maintains partial communication with the base station.

The UE interrupts partial communication with the base station or maintains partial communication with the base station in at least one of the following manners:
The UE may receive/blindly detect the first-type downlink signaling sent by the base station;
The UE stops receiving the second-type downlink signaling sent by the base station;
The UE may send first-type uplink signaling to the base station;
The UE stops sending second-type uplink signaling to the base station;
The UE stops performing SSB measurement;
The UE stops performing CSI-RS measurement;
The UE may perform SSB measurement; and
The UE may perform PDCCH monitoring or PDCCH monitoring for paging DCI/ SIB indication.

In some embodiments, the first-type downlink signaling includes at least one of the following: SSB, SIB, specific SIB, paging DCI, paging PDSCH, SIB-related signaling, retransmitted DCI, or specific SIB-related signaling.

The first-type downlink signaling includes signaling related to IoT communication.

The first-type downlink signaling includes signaling with a priority level of 0 or information with the highest priority level.

The first-type downlink signaling includes measurement signaling, such as SSB or CSI-RS.

The first-type downlink signaling includes specific measurement signaling, such as SSB for radio resource management (RRM) or CSI-RS for measuring RSRP or SINR.

The first-type downlink signaling includes periodically and/or semi-persistently transmitted information, for example, periodic and/or semi-persistent CSI-RS.

The first-type downlink signaling includes aperiodically triggered information, for example, aperiodic CSI-RS.

The first-type downlink signaling includes signaling related to a first-type QoS flow.

In some embodiments, the first-type QoS flow has a priority level equal to or higher than (≥) X. X is a positive integer equal to or less than (≤) 60. A smaller X indicates a lower priority level.

In some embodiments, X is indicated by signaling or is predefined.

In some embodiments, the first-type QoS flow has a latency equal to or smaller than (≤) Y.

In some embodiments, Y is an integer equal to or greater than (≥) 5 ms.

In some embodiments, Y is indicated by signaling or is predefined.

In some embodiments, the first-type QoS flow is predefined.

The first-type downlink signaling includes signaling related to a first-type service.

In some embodiments, the first-type service includes at least an Ultra-Reliable and Low Latency Communications (URLLC) service.

In some embodiments, the first-type service includes at least an extended reality (XR) service.

In some embodiments, the first-type service includes at least a low power wake-up signal (LP-WUS) service.

The preceding embodiments may be combined.

In some embodiments, the second-type downlink signaling includes at least one of the following: SPS PDSCH, periodic CSI-RS, semi-persistent CSI-RS, or DCI for new data transmission.

The second-type downlink signaling may also include at least one of the following: PDSCH, DCI, CSI-RS, or SSB.

The second-type downlink signaling includes at least uplink scheduling DCI (for example, DCI format 0-0, 0-1, 0-2, 0-3).

The second-type downlink signaling includes signaling with a priority level of 1 or information that is not of the highest priority level.

The second-type downlink signaling includes measurement signaling, such as SSB or CSI-RS.

The second-type downlink signaling includes signaling for specific measurement, such as a measurement reference signal for beam selection, SSB, and CSI-RS for channel measurement.

The second-type downlink signaling includes periodically/semi-persistently transmitted information, such as periodic or semi-persistent CSI-RS and SPS PDSCH.

The second-type downlink signaling includes aperiodically triggered information, such as aperiodic CSI-RS.

The second-type downlink signaling includes signaling related to a second-type QoS flow.

In some embodiments, the second-type QoS flow has a priority level lower than (<) X. X is a positive integer less than or equal to (≤) 60. A smaller X indicates a lower priority level.

In some embodiments, X is indicated by signaling or is predefined.

In some embodiments, the second-type QoS flow has a latency greater than (>) Y.

In some embodiments, Y is an integer equal to or greater than (≥) 5 ms.

In some embodiments, Y is indicated by signaling or is predefined.

In some embodiments, the second-type QoS flow is predefined.

In some embodiments, the second-type downlink signaling includes signaling associated with a second-type service.

In some embodiments, the second-type service includes at least an enhanced mobile broadband (eMBB) service.

In some embodiments, the second-type service includes at least an LP-WUS service.

In some embodiments, the second-type service includes at least a reduced capability (RedCap) service.

In some embodiments, the first-type uplink signaling includes at least one of the following: Msg1, MsgA, SR, signaling related to the RACH, or a periodic CSI report.

The first-type uplink signaling includes signaling with a priority level of 0 or information with the highest priority level.

The first-type uplink signaling includes signaling related to IoT communication.

The first-type uplink signaling includes measurement-related signaling, such as a CSI report.

The first-type uplink signaling includes signaling related to specific measurement, for example, a CSI report including a rank indicator (RI).

The first-type uplink signaling includes periodically/semi-persistently transmitted information, for example, a periodic/semi-persistent CSI report and a configured grant physical uplink shared channel (CG PUSCH).

The first-type uplink signaling includes a periodically/semi-persistently transmitted CSI report including a rank indicator (RI).

The first-type uplink signaling includes aperiodically triggered information, for example, an aperiodic CSI report.

The first-type uplink signaling includes signaling related to a first-type QoS flow.

In some embodiments, the first-type QoS flow has a priority level equal to or higher than (≥) X. X is a positive integer equal to or less than (≤) 60. A smaller X indicates a lower priority level.

In some embodiments, X is indicated by signaling or is predefined.

In some embodiments, the first-type QoS flow has a latency equal to or less than (≤) Y.

In some embodiments, Y is an integer equal to or greater than (≥) 5 ms.

In some embodiments, Y is indicated by signaling or is predefined.

In some embodiments, the second-type QoS flow is predefined.

In some embodiments, the first-type uplink signaling includes signaling associated with a first-type service.

In some embodiments, the first-type service includes at least a URLLC service.

In some embodiments, the first-type service includes at least an XR service.

In some embodiments, the first-type service includes at least an LP-WUS service.

In some embodiments, the second-type uplink signaling includes at least one of the following: SR, BSR, a periodic CSI report, semi-persistent CSI for PUSCH, semi-persistent CSI for PUCCH, periodic SRS, or CG PUSCH.

The second-type uplink signaling may also include at least one of the following: PUSCH, SRS, or a CSI report.

The second-type uplink signaling includes signaling with a priority level of 1 or information that is not of the highest priority level.

The second-type uplink signaling includes measurement-related signaling, such as a CSI report.

The second-type uplink signaling includes periodically/semi-persistently transmitted information, such as periodic or semi-persistent SRS and CG PUSCH.

The second-type uplink signaling includes signaling related to a second-type QoS flow.

In some embodiments, the second-type QoS flow has a priority level lower than X. X is a positive integer equal to or less than (≤) 60. A smaller X indicates a lower priority level.

In some embodiments, X is indicated by signaling or is predefined.

In some embodiments, the second-type QoS flow has a latency of greater than (>) Y.

In some embodiments, Y is an integer equal to or greater than (≥) 5 ms.

In some embodiments, Y is indicated by signaling or is predefined.

In some embodiments, the second-type QoS flow is predefined.

The second-type uplink signaling includes signaling related to the second-type service.

In some embodiments, the second-type service includes at least an eMBB service.

In some embodiments, the second-type service includes at least an LP-WUS service.

In some embodiments, the second-type service includes at least a RedCap service.

The preceding embodiments may be combined.

In some embodiments, the UE stops partial SSB measurement, for example, beam-related SSB measurement.

In some embodiments, the UE stops partial CSI-RS measurement, for example, aperiodic or semi-persistent CSI-RS measurement.

In some embodiments, the UE may perform partial SSB measurement, for example, RRM measurement.

For example, interruption of partial communication between the UE and the base station indicates that the UE is able to send uplink signaling to the base station, does not receive downlink signaling, and does not perform blind detection of the PDCCH.

For example, interruption of partial communication between the UE and the base station indicates that the UE is able to send the first-type uplink signaling to the base station, does not receive the downlink signaling, and does not perform blind detection of the PDCCH.

For example, interruption of partial communication between the UE and the base station indicates that the UE is able to send the first-type uplink signaling to the base station, does not receive the second-type downlink signaling, and is able to perform SSB measurement.

For example, interruption of partial communication between the UE and the base station indicates that the UE is able to send the first-type uplink signaling to the base station, does not receive the second-type downlink signaling, and does not perform SSB measurement.

The interruption of partial communication between the UE and the base station ends upon satisfaction of a second condition.

The second condition includes at least one of the following:
The UE sends a scheduling request (SR);
The UE sends Msg1;
The UE sends MsgA;
The UE performs random access;
The UE sends a buffer status report (BSR); or
The UE sends sixth signaling to the base station.

In some embodiments, the sixth signaling indicates that the UE intends to resume communication with the base station.

### Embodiment three

During the period in which the UE, as an intermediate node, assists communication between the IoT device and the base station, the UE can transmit part or all signaling with the base station in a period of time (a second time period). When the UE transmits signaling with the base station, the UE interrupts communication with the IoT device.

During the period in which the UE, as an intermediate node, assists communication between the IoT device and the base station, the first time period in which the UE communicates with the IoT device may be defined as one of the following:
a first time node to a second time node;
a first time node to timer expiration;
a predefined time period after a first time node; or
a time period after a first time node.

In some embodiments, the first time node is one of the following:
a slot/subframe/frame/symbol in which the first signaling/signal is received;
a slot/subframe/frame/symbol after a first effective delay of the slot/subframe/frame/symbol in which the first signaling/signal is received;
a slot/subframe/frame/symbol in which feedback information is sent;
a slot/subframe/frame/symbol after a second effective delay of the slot/subframe/frame/symbol in which the feedback information is sent;
a slot/subframe/frame/symbol in which the second signaling/signal is received; or
a slot/subframe/frame/symbol after a third effective delay of the slot/subframe/frame/symbol in which the second signaling/signal is received.

In some embodiments, the second time node is one of the following:
a slot/subframe/frame/symbol in which the fourth signaling is sent; or
a slot/subframe/frame/symbol in which the third signaling is received.

The length of the time period after the first time node is configured by higher-layer signaling or indicated by layer-1 signaling. The higher-layer signaling includes RRC signaling or MAC CE signaling. The layer-1 signaling includes DCI and first signaling/signal.

The interruption of communication between the UE and the IoT device indicates at least one of the following:
The UE does not monitor/receive a signal/signaling sent by the IoT device;
The UE does not send a corresponding signal/signaling to the IoT device;
The UE does not send an unmodulated signal; or
The UE does not send/receive a signal/signaling on a first resource.

The first resource is a working frequency band of the IoT device.

### Embodiment four

A window is defined. The communication among the UE, the base station, and the IoT device is controlled according to the window.

In some embodiments, while the UE as an intermediate node assists communication between the IoT device and the base station, the UE communicates with the base station within a specific window, and the UE stops communication with the base station outside the window.

In some embodiments, stopping communication with the base station indicates that communication with the IoT device is allowed.

In some embodiments, while the UE as an intermediate node assists communication between the IoT device and the base station, the UE communicates with the IoT device within a specific window, and the UE stops communication with the IoT device outside the window.

In some embodiments, stopping communication with the IoT device indicates that communication with the base station is allowed.

In some embodiments, configuration information of the window is indicated by signaling or is preconfigured/predefined.

For example, the configuration information of the window indicated by signaling or preconfigured/predefined includes at least one of the following: the period of the window, the duration of the window, an offset value, or the maximum number of window occurrences.

The offset value indicates the offset between the start position of the window and the reference point.

The reference point may be first signaling, feedback information, second signaling, or a time-domain position (for example, frame/slot/symbol/subframe) of signaling sent by the UE to the IoT device.

The maximum number of window occurrences is the maximum number of available windows while the UE as an intermediate node assists communication between the IoT device and the base station.

In some embodiments, when the number of windows reaches the maximum number, subsequent windows are no longer valid (that is, the UE cannot communicate with the base station within those windows).

In some embodiments, the window appears periodically according to the period of the window.

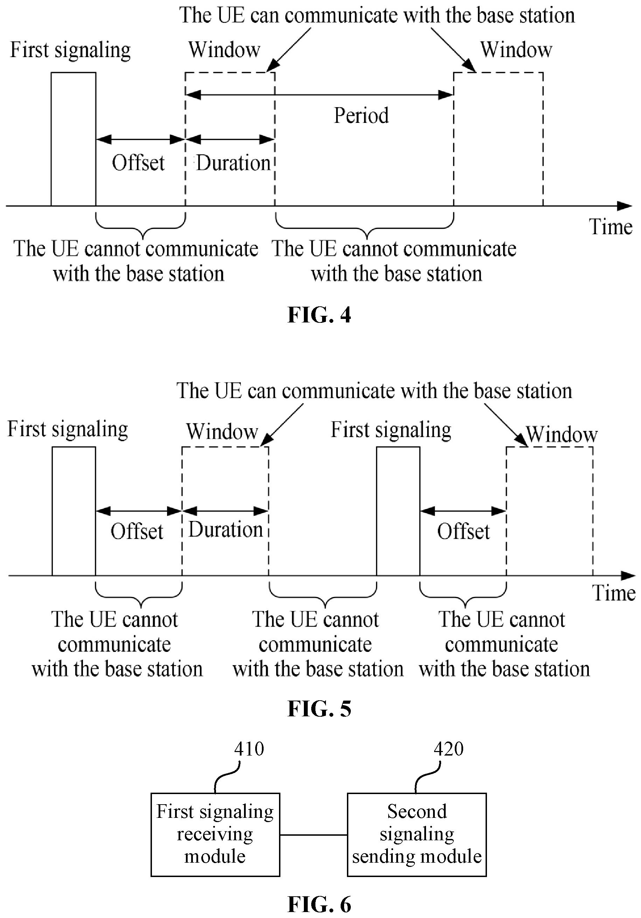

FIG. 4 is a diagram of a window. As shown in FIG. 4, the reference point is the first signaling; the first window starts after an offset from the first signaling, the length of the window is duration, and adjacent windows are spaced by a period. The UE can communicate with the base station within the window. The UE cannot communicate with the base station outside the window.

In some embodiments, the window is located after each reference point or after an offset from each reference point.

FIG. 5 is a diagram of a window. As shown in FIG. 5, the reference point is the first signaling; the window starts after an offset from the first signaling, the length of the window is duration, and only one window is activated/appears after the reference point.

In some embodiments, if the UE is configured with DRX (i-DRX, c-DRX, or e-DRX), the window configuration reuses the DRX configuration. That is, the DRX active time is a window period.

In some embodiments, the window ends when a third condition is satisfied. The third condition includes at least one of the following: receiving signaling indicating termination of the window; or no signaling is received and/or sent within a period of time. The period of time is predefined or indicated by signaling.

In some embodiments, the window ends when a second condition is satisfied.

In some embodiments, within the window, the UE receives and/or sends data at a specific resource position.

In some embodiments, the specific resource position is represented by another sub-window. The configuration/definition of the sub-window is the same as that of the window.

In some embodiments, the specific resource position is configured by RRC. By way of example, the RRC configuration is dedicated to resources within the window, for example, specific search space configuration, specific CORESET configuration, specific SPS configuration, specific CG configuration, specific CSI-RS configuration, specific SRS configuration, specific PUCCH configuration, specific DCI format configuration, or specific SSB configuration.

In some embodiments, within the window, the UE cannot send signaling related to communication with the IoT device.

In some embodiments, within the window, the UE stops communication with the IoT device.

In some embodiments, the position of the window is determined by a timer. For example, the length of the timer is configured by signaling or predefined. Determining the position of the window by the timer indicates that the window is activated when the timer expires.

In some embodiments, when a fourth condition is satisfied, the timer is started/triggered/activated/reactivated. The fourth condition includes at least one of the following:
The UE sends the second signaling;
The UE receives the first signaling;
The window ends;
The third signaling sent by the IoT device is received;
The UE sends feedback information to the base station; or
The UE is activated as an intermediate node.

In some embodiments, when the first condition is satisfied, the timer is started/triggered/activated/reactivated.

In some embodiments, window configurations for a UE in an active state and a UE in an idle/inactive state are different.

In some embodiments, different first signaling triggers different window configurations.

In some embodiments, the configuration information of the window is related to at least one of the following: configuration of a measurement gap; configuration of an SSB; configuration of a CSI-RS; configuration of a CSI reporting position; configuration of an SPS; or configuration of a CG.

### Embodiment five

Communication between the UE and the IoT device and communication between the UE and the base station can be performed simultaneously.

Communication between the UE and the IoT device includes at least one of the following: first signaling, second signaling, third signaling, or fourth signaling.

In some embodiments, communication between the UE and the IoT device includes second signaling and third signaling.

The uplink signaling of communication between the UE and the base station includes at least one of the following: SR, BSR, CSI report, hybrid automatic repeat request (HARQ) feedback, PUCCH, Msg1, Msg3, dynamic grant (DG) data PUSCH, or configured grant (CG) PUSCH.

The downlink signaling of communication between the UE and the base station includes at least one of the following: DCI, CSI-RS, SSB, DG PDSCH, or SPS PDSCH.

The uplink signaling of communication between the UE and the base station is signaling sent by the UE to the base station. The downlink signaling of communication between the UE and the base station is signaling sent by the base station to the UE.

In some embodiments, when the second signaling conflicts with the uplink signaling of communication between the UE and the base station, the UE sends the signaling for communication with the base station and does not send or delays transmission of the second signaling. That is, the priority level of the uplink signaling of communication between the UE and the base station is greater than/higher than the priority level of the second signaling.

In some embodiments, a conflict indicates that the transmission timing of the second signaling overlaps, in the time domain, that of the uplink signaling from the UE to the base station.

In some embodiments, a conflict indicates that the transmission resource of the second signaling overlaps that of the uplink signaling from the UE to the base station.

In some embodiments, when the second signaling conflicts with the uplink signaling of communication between the UE and the base station, the UE sends signaling with a higher priority level.

Signaling with a lower priority level is delayed or not sent. For example, the priority level of HARQ (ACK/NACK) is higher than that of the second signaling. For example, the priority level of DG PUSCH is higher than that of the second signaling. For example, the priority level of the second signaling is higher than that of the periodic/semi-persistent CSI report. For example, the priority level of the second signaling is higher than that of the CSI report. For example, the priority level of the second signaling is higher than that of the SR/BSR. For example, the priority level of Msg1/Msg3 is higher than that of the second signaling.

In some embodiments, when the third signaling conflicts with the downlink signaling in communication between the UE and the base station, the UE monitors/receives the third signaling.

In some embodiments, a conflict indicates that the monitoring/reception timing of the third signaling overlaps, in the time domain, that of the downlink signaling in communication between the UE and the base station.

In some embodiments, a conflict indicates that the monitoring/reception resource of the third signaling overlaps, in the time domain, that of the downlink signaling in communication between the UE and the base station.

In some embodiments, when the third signaling conflicts with the downlink signaling in communication between the UE and the base station, the UE monitors/receives the downlink signaling/signal in communication between the UE and the base station.

In some embodiments, when the third signaling conflicts with the downlink signaling in communication between the UE and the base station, the UE monitors/receives the signaling/signal with a higher priority level.

Signaling with a lower priority level is not received or not monitored. For example, the priority level of the third signaling is higher than that of CSI-RS. For example, the priority level of the third signaling is higher than that of periodic or semi-persistent CSI-RS. For example, the priority level of the third signaling is higher than that of DCI for new transmission. For example, the priority level of the third signaling is higher than that of DCI transmitted in Type 3 search space (SS). For example, the priority level of DCI for retransmission is higher than that of the third signaling. For example, the priority level of DCI transmitted in Type 0/1/2/0A search space (SS) is higher than that of the third signaling. For example, the priority level of the third signaling is higher than that of SSB. For example, the priority level of SSB is higher than that of the third signaling. For example, the priority level of signaling carrying system information is higher than that of the third signaling.

In some embodiments, when communication between the UE and the IoT device conflicts with communication between the UE and the base station, the UE communicates with the base station, does not communicate with the IoT device, or postpones communication with the IoT device.

In some embodiments, when communication between the UE and the IoT device conflicts with communication between the UE and the base station, the UE communicates with the IoT device, does not communicate with the base station, or postpones communication with the base station.

In some embodiments, when signaling for communication between the UE and the IoT device conflicts with signaling for communication between the UE and the base station, the UE communicates with signaling of a higher priority level according to the priority level.

A conflict indicates that the signaling transmission timing overlaps or signaling transmission resources overlap. The priority may be configured according to the priority order described earlier.

The priority order may include the following examples.

For example, the priority level of HARQ (ACK/NACK) is higher than that of the third signaling. For example, the priority level of DG PUSCH is higher than that of the third signaling. For example, the priority level of the third signaling is higher than that of the periodic/semi-persistent CSI report. For example, the priority level of the third signaling is higher than that of CSI report. For example, the priority level of the third signaling is higher than that of SR/BSR. For example, the priority level of Msg1/Msg3 is higher than that of the third signaling.

For example, the priority level of the second signaling is higher than that of CSI-RS. For example, the priority level of the second signaling is higher than that of periodic or semi-persistent CSI-RS. For example, the priority level of the second signaling is higher than that of DCI for new transmission. For example, the priority level of the second signaling is higher than that of DCI transmitted in Type 3 search space (SS). For example, the priority level of DCI for retransmission is higher than that of the second signaling. For example, the priority level of DCI transmitted in Type 0/1/2/0A search space (SS) is higher than that of the second signaling. For example, the priority level of the second signaling is higher than that of SSB. For example, the priority level of SSB is higher than that of the second signaling. For example, the priority level of signaling carrying system information is higher than that of the second signaling.

For example, the priority level of HARQ (ACK/NACK) is higher than that of signaling for communication between the UE and the IoT device. For example, the priority level of DG PUSCH is higher than that of signaling for communication between the UE and the IoT device. For example, the priority level of signaling for communication between the UE and the IoT device is higher than that of periodic/semi-persistent CSI report. For example, the priority level of signaling for communication between the UE and the IoT device is higher than that of CSI report. For example, the priority level of signaling for communication between the UE and the IoT device is higher than that of SR/BSR. For example, the priority level of Msg1/Msg3 is higher than that of signaling for communication between the UE and the IoT device.

For example, the priority level of signaling for communication between the UE and the IoT device is higher than that of CSI-RS. For example, the priority level of signaling for communication between the UE and the IoT device is higher than that of periodic or semi-persistent CSI-RS. For example, the priority level of signaling for communication between the UE and the IoT device is higher than that of DCI for new transmission. For example, the priority level of signaling for communication between the UE and the IoT device is higher than that of DCI transmitted in Type 3 search space (SS). For example, the priority level of DCI for retransmission is higher than that of signaling for communication between the UE and the IoT device. For example, the priority level of DCI transmitted in Type 0/1/2/0A SS is higher than that of signaling for communication between the UE and the IoT device. For example, the priority level of signaling for communication between the UE and the IoT device is higher than that of SSB. For example, the priority level of SSB is higher than that of signaling for communication between the UE and the IoT device. For example, the priority level of signaling carrying system information is higher than that of signaling for communication between the UE and the IoT device.

For example, the priority level of signaling for communication between the UE and the base station is higher than that of the second signaling. For example, the priority level of signaling for communication between the UE and the base station is higher than that of the third signaling. For example, the priority level of the second signaling is higher than that of signaling for communication between the UE and the base station.

### Embodiment six

The first time period may be periodic, semi-persistent, or aperiodically triggered.
1. Periodic first time period indicates that: The first time period occurs periodically. In some embodiments, the first time period is configured by RRC or predefined. In some embodiments, the first time period becomes effective after being configured.
   For example, a periodic first time period may be configured in a manner similar to that in embodiment four.
2. Semi-persistent first time period indicates that: The first time period is required to be triggered and after being triggered, occurs periodically.

For example, the first signaling triggers a semi-persistent first time period.

In some embodiments, the first time period is configured by RRC or predefined.

For example, a periodic first time period may be configured in a manner similar to that in embodiment four.

3. Aperiodically triggered first time period indicates that: The first time period is required to be triggered and after being triggered, occurs once or N times. N is a positive integer greater than 1 and less than or equal to 20.

For example, the first signaling triggers one first time period.

In some embodiments, the first-type first signaling triggers a semi-persistent terminal time period. In some embodiments, the second-type first signaling triggers an aperiodically triggered first time period. The first-type first signaling includes at least one of the following: a command indicating periodic inventory/access/paging or a command indicating inventory/access/paging. The second-type first signaling includes at least one of the following: a command indicating a read operation or a command indicating a write operation. The first-type first signaling is information for multiple IoT devices and does not indicate a specific IoT device. The second-type first signaling is information for one or more specific IoT devices.

In some embodiments, after signaling or a condition is triggered, an interruption period starts after a preparation time. The preparation time may be predefined or indicated by signaling.

In some embodiments, the preparation time for semi-persistent triggering is different from the preparation time for aperiodic triggering.

In some embodiments, the preparation time for semi-persistent triggering is the same as the preparation time for aperiodic triggering.

In some embodiments, after signaling or a condition is triggered, an interruption period starts at least after a preparation time. The preparation time is predefined, reported by the UE, or indicated by signaling.

In some embodiments, the preparation time for semi-persistent triggering is different from the preparation time for aperiodic triggering.

In some embodiments, the preparation time for semi-persistent triggering is the same as the preparation time for aperiodic triggering.

FIG. 6 is a diagram illustrating the structure of a communication apparatus according to an embodiment. The apparatus is applied to a first communication node. As shown in FIG. 6, the apparatus includes a first signaling receiving module 410 and a second signaling sending module 420.

The first signaling receiving module 410 is configured to receive first signaling sent by a second communication node, where the first signaling includes signaling for communication with a third communication node.

The second signaling sending module 420 is configured to send second signaling to the third communication node, where the second signaling is related to the first signaling.

The communication apparatus of this embodiment of the present application solves the problem of a limited communication distance between the second communication node and the third communication node. The first communication node serves as an intermediate node between the second communication node and the third communication node to assist communication between the second communication node and the third communication node, effectively extending the communication distance between the second communication node and the third communication node, facilitating better device application in different scenarios, and enabling the third communication node with low complexity and low power consumption to be widely used.

In some embodiments, the apparatus also includes an operation execution module configured to, after entering a first time period, perform one or more of the following operations: stopping all communication with the second communication node; maintaining partial communication with the second communication node; maintaining all communication with the third communication node; and maintaining partial communication with the third communication node.

In some embodiments, a period of communication between the apparatus and the third communication node in a first time period.

In some embodiments, during communication with the third communication node, the first communication node is in one of the following states: an idle state; an inactive state; an outside DRX active time state; or a connected state.

In some embodiments, during communication with the third communication node, one or more of the following operations are performed: monitoring part of a physical downlink control channel; performing part of measurement; reporting part of measurement results; stopping monitoring of the physical downlink control channel; stopping measurement; and stopping the measurement result reporting.

In some embodiments, the apparatus also includes a time period determination module configured to, before entering the first time period, perform one or more of the following operations: triggering the first time period after satisfying a first condition; and determining the position of the first time period according to configuration information of the first time period.

In some embodiments, the apparatus is also configured to communicate with the third communication node after satisfying a first condition.

In some embodiments, the first condition includes one or more of the following: receiving the first signaling sent by the second communication node; after a first effective time following receiving the first signaling sent by the second communication node; after receiving the first signaling sent by the second communication node, entering an idle state or an inactive state; after receiving the first signaling sent by the second communication node, sending feedback information to the second communication node; and after receiving the first signaling sent by the second communication node, receiving radio resource control release signaling sent by the second communication node.

In some embodiments, the first signaling is carried in radio resource control release signaling; or the first signaling indicates radio resource control release information; or the first signaling indicates radio resource control release signaling, where the first signaling includes first-type information.

In some embodiments, the apparatus is also configured to end a first time period after satisfying a second condition; stop communication with the third communication node after satisfying a second condition; or communicate with the second communication node after satisfying a second condition.

In some embodiments, the second condition includes one or more of the following: sending fourth signaling; receiving third signaling; after a predefined time; a communication quality measurement result not satisfying a condition; a channel quality measurement result not satisfying a condition; the second communication node being out of synchronization; completing inventory; within a period of time, not receiving signaling sent by the third communication node; and receiving an indication of fifth signaling.

In some embodiments, the second condition includes one or more of the following: sending a scheduling request; sending message 1; sending message A; performing random access; sending a buffer status report; and sending sixth signaling.

In some embodiments, the first time period is periodic, semi-persistent, or aperiodically triggered.

In some embodiments, the apparatus is also configured to communicate with the second communication node within a window according to a first configuration; and communicate with the second communication node outside the window according to a second configuration.

In some embodiments, the apparatus is also configured to communicate with the third communication node within a window; and stop communication with the third communication node outside the window.

In some embodiments, configuration information of the window is indicated by signaling, or preconfigured, or predefined.

In some embodiments, communicating with the third communication node within the window includes receiving or sending data within the window according to a configured resource position.

In some embodiments, the configured resource position includes one or more of the following: a configured search space; a configured control resource set; configured semi-persistent scheduling; a configuration of a configured grant; a configured channel state information reference signal; a configured channel sounding reference signal; a configured physical uplink control channel; a configured downlink control signaling format; and a configured synchronization signal block.

In some embodiments, the apparatus is also configured to, after stopping communication with the third communication node outside the window, communicate with the second communication node outside the window.

In some embodiments, the apparatus is also configured to, after communicating with the third communication node within the window, stop all communication with the second communication node, or maintain partial communication with the second communication node.

In some embodiments, the apparatus also includes a first transceiver module configured to, in response to maintaining partial communication with the second communication node, receive first-type downlink signaling sent by the second communication node and/or send first-type uplink signaling to the second communication node.

In some embodiments, the first-type downlink signaling includes one or more of the following: a synchronization signal block; a system information block; a specific system information block; paging downlink control signaling; and a paging physical downlink shared channel; and the first-type uplink signaling includes one or more of the following: message 1; message A; a scheduling request; signaling related to random access information; and a periodic channel state information report.

In some embodiments, the window appears periodically according to the period of the window.

In some embodiments, the apparatus also includes a signaling sending module configured to, in response to the second signaling conflicting with first uplink signaling, compare the priority level of the second signaling and the priority level of the first uplink signaling to determine signaling with a higher priority level; and send the signaling with the higher priority level.

The first uplink signaling is uplink signaling sent when the first communication node communicates with the second communication node.

In some embodiments, the apparatus also includes a signaling receiving module configured to, in response to third signaling conflicting with first downlink signaling, compare the priority level of the third signaling and the priority level of the first downlink signaling to determine signaling with a higher priority level; and monitor or receive the signaling with the higher priority level.

The first downlink signaling is downlink signaling sent when the first communication node communicates with the second communication node.

In some embodiments, the information for communication with the third communication node includes at least one of the following: inventory information; scheduling information; access information; wake-up information; indication information for activating the first communication node as an intermediate node; a start time of communication between the first communication node and the third communication node; resources for communication between the first communication node and the third communication node; indication of a waveform/modulation scheme of transmission from the first communication node to the third communication node; the number of repetitions of transmissions from the first communication node to the third communication node; a frequency-domain position of transmission from the first communication node to the third communication node; or a power indication of transmission from the first communication node to the third communication node.

In some embodiments, the apparatus also includes a third signaling receiving module configured to receive third signaling fed back by the third communication node; and a fourth signaling sending module configured to send fourth signaling to the second communication node, where the fourth signaling is related to the third signaling.

In some embodiments, the third signaling is sent by the third communication node by using a backscatter/amplitude shift keying method.

In some embodiments, the second signaling is sent using an amplitude shift keying method.

In some embodiments, the first signaling is sent by the second communication node through at least one of the following: a non-access stratum message, a radio resource control message, downlink control information, a media access control control element, layer-1 signaling, or small data signaling.

The communication apparatus provided in this embodiment and the communication method provided in the preceding embodiments belong to the same concept. For technical details not described in detail in this embodiment, reference may be made to any one of the preceding embodiments, and this embodiment has the same beneficial effects as the communication method performed.

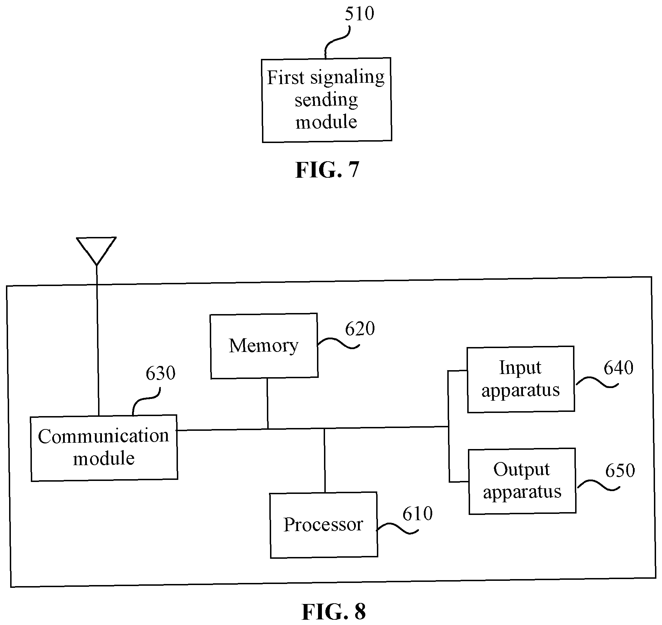

FIG. 7 is a diagram illustrating the structure of a communication apparatus according to an embodiment. The apparatus is applied to a first communication node. As shown in FIG. 7, the apparatus includes a first signaling sending module 510.

The first signaling sending module 510 is configured to send first signaling to a first communication node, where the first signaling includes information for communication between the first communication node and a third communication node.

The communication method of this embodiment of the present application solves the problem of a limited communication distance between the second communication node and the third communication node. The first communication node serves as an intermediate node between the second communication node and the third communication node to assist communication between the second communication node and the third communication node, effectively extending the communication distance between the second communication node and the third communication node, facilitating better device application in different scenarios, and enabling the third communication node with low complexity and low power consumption to be widely used.

In some embodiments, the apparatus is also configured to, after satisfying a first condition, perform one or more of the following operations:
stopping all communication with the first communication node;
stopping sending part of downlink control information;
stopping sending part of measurement reference signals;
stopping receiving part of measurement result reports;
stopping sending the downlink control information;
stopping sending the measurement reference signals;
stopping receiving the measurement result reports; and
maintaining partial communication with the first communication node.

In some embodiments, the first condition includes one or more of the following:
the first communication node receives the first signaling;
after a first effective time following the first communication node receiving the first signaling;
the first communication node receives the first signaling and enters an idle state or an inactive state;
after the first communication node sends the second signaling;
a third effective time elapses after the first communication node sends the second signaling;
the first communication node receives the first signaling and sends feedback information to the second communication node;
a fifth effective time elapses after the first communication node receives the first signaling and sends feedback information to the second communication node;
the first communication node receives the first signaling and receives radio resource control release signaling;
the first communication node receives the first signaling, where the first signaling is carried in the radio resource control release signaling; and
the first communication node receives the first signaling, where the first signaling indicates radio resource control release information.

In some embodiments, the apparatus is also configured to communicate with the first communication node within a window by using a first configuration; and communicate with the first communication node outside the window by using a second configuration.

In some embodiments, the apparatus also includes a second transceiver module configured to, in response to maintaining partial communication with the first communication node, send first-type downlink signaling to the first communication node and/or receive first-type uplink signaling sent by the first communication node.

In some embodiments, the first-type downlink signaling includes one or more of the following: a synchronization signal block; a system information block; a specific system information block; paging downlink control signaling; and a paging physical downlink shared channel; and the first-type uplink signaling includes one or more of the following: message 1; message A; a scheduling request; signaling related to random access information; and a periodic channel state information report.

In some embodiments, the apparatus also includes a fourth signaling receiving module configured to receive fourth signaling sent by the first communication node, where the fourth signaling includes information returned by the third communication node.

In some embodiments, the first signaling is sent through at least one of the following: a non-access stratum message, a radio resource control message, downlink control information, a media access control control element, layer-1 signaling, or small data signaling.

The communication apparatus provided in this embodiment and the communication method provided in the preceding embodiments belong to the same concept. For technical details not described in detail in this embodiment, reference may be made to any one of the preceding embodiments, and this embodiment has the same beneficial effects as the communication method performed.

An embodiment of the present application provides a communication node. FIG. 8 is a diagram illustrating the structure of a communication node according to an embodiment. As shown in FIG. 8, the communication node of the present application includes a memory 620, a processor 610, and a computer program stored in the memory and executable by the processor, where the processor 610, when executing the program, performs the communication method.

The communication node may also include a memory 620. One or more processors 610 may be provided in the communication node. FIG. 8 illustrates one processor 610 by way of example. The memory 620 is configured to store one or more programs. When executed by the one or more processors 610, the one or more programs cause the one or more processors 610 to perform the communication method of any embodiment of the present application.

The communication node also includes a communication module 630, an input apparatus 640, and an output apparatus 650.

The processor 610, the memory 620, the communication module 630, the input apparatus 640, and the output apparatus 650 in the communication node may be connected through a bus or in other manners, and connection through a bus is used as an example in FIG. 8.

The input apparatus 640 may be configured to receive inputted digital or character information and generate key signal input related to user settings and function control of the communication node. The output apparatus 650 may include a display device such as a display screen.

The communication module 630 may include a receiver and a sender. The communication module 630 is configured to perform information transceiving communication under the control of the processor 610.

As a computer-readable storage medium, the memory 620 may be configured to store software programs, computer-executable programs, and modules, such as program instructions/modules corresponding to the communication method in embodiments of the present application (for example, the first signaling receiving module 410 and the second signaling sending module 420 or the fourth signaling receiving module 510 in the communication apparatus). The memory 620 may include a program storage region and a data storage region, where the program storage region may store an operating system and an application program required by at least one function, and the data storage region may store data and the like created according to the use of the communication node. Additionally, the memory 620 may include a high-speed random-access memory and may also include a nonvolatile memory such as at least one disk memory, a flash memory, or another nonvolatile solid-state memory. In some examples, the memory 620 may also include memories remote relative to the processor 610 and accessible to the communication node via a network. Examples of the network include, but are not limited to, the Internet, an intranet, a local area network, a mobile communication network, and a combination thereof.

An embodiment of the present application further provides a storage medium. The storage medium stores a computer program which, when executed by a processor, causes the processor to perform any communication method according to embodiments of the present application.

A computer storage medium according to the embodiments of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. More specific examples of the computer-readable storage medium include (non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical storage element, a magnetic storage device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by any suitable medium including, but not limited to, a wireless medium, a wire, an optical cable, a radio frequency (RF), or any suitable combination thereof.

An embodiment of the present invention provides a computer program product. The computer program product includes a computer program which, when executed by a processor, causes the processor to perform the communication method of any embodiment of the present application.

Computer program codes for performing operations of the present application may be written in one or more programming languages or a combination thereof. The programming languages include object-oriented programming languages such as Java, Smalltalk, and C++ and may further include conventional procedural programming languages such as "C" and similar programming languages. Program codes may be executed entirely on a user computer, executed partly on a user computer, executed as a standalone software package, executed partly on a user computer and partly on a remote computer, or executed entirely on a remote computer or a server. In the case where the remote computer is involved, the remote computer may be connected to the user computer via any type of network including a local area network (LAN) or a wide area network (WAN) or may be connected to an external computer (for example, via the Internet provided by an Internet service provider).

Example embodiments of the present application are described above and are not intended to limit the scope of the present application.

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of the present application is provided above through exemplary and non-limiting examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

1. A communication method, applied to a first communication node, comprising:
receiving first signaling sent by a second communication node, wherein the first signaling comprises information for communication with a third communication node; and
sending second signaling to the third communication node, wherein the second signaling is related to the first signaling.

2. The communication method of claim 1, further comprising:
after entering a first time period, performing at least one of the following operations:
stopping all communication with the second communication node;
maintaining partial communication with the second communication node;
maintaining all communication with the third communication node; or
maintaining partial communication with the third communication node.

3. The communication method of claim 1, wherein
a period of communication between the first communication node and the third communication node is a first time period.

4. The communication method of any one of claims 1 to 3, wherein
during communication with the third communication node, the first communication node is in one of the following states:
an idle state;
an inactive state;
an inactive time state of a discontinuous reception; or
a connected state.

5. The communication method of any one of claims 1 to 3, further comprising:
during communication with the third communication node, performing at least one of the following operations:
monitoring part of a physical downlink control channel;
performing part of measurement;
reporting part of measurement results;
stopping monitoring the physical downlink control channel;
stopping measurement; or
stopping measurement result reporting.

6. The communication method of claim 2, further comprising:
before entering the first time period, performing one or more of the following operations:
triggering the first time period after satisfying a first condition; and
determining a position of the first time period according to configuration information of the first time period.

7. The communication method of claim 1, further comprising:
communicating with the third communication node after satisfying a first condition.

8. The communication method of claim 6 or 7, wherein the first condition comprises at least one of the following:
receiving the first signaling sent by the second communication node;
after a first effective time following receiving the first signaling sent by the second communication node;
after receiving the first signaling sent by the second communication node, entering an idle state or an inactive state;
after receiving the first signaling sent by the second communication node, sending feedback information to the second communication node; or
after receiving the first signaling sent by the second communication node, receiving radio resource control release signaling sent by the second communication node.

9. The communication method of claim 1, wherein
the first signaling is carried in radio resource control release signaling; or
the first signaling indicates radio resource control release information; or
the first signaling indicates radio resource control release signaling, wherein the first signaling comprises first-type information.

10. The communication method of claim 1 or 2, further comprising one of the following:
ending a first time period after satisfying a second condition;
stopping communication with the third communication node after satisfying a second condition; or
communicating with the second communication node after satisfying a second condition.

11. The communication method of claim 10, wherein the second condition comprises at least one of the following:
sending fourth signaling;
receiving third signaling;
after a predefined time;
a communication quality measurement result not satisfying a condition;
a channel quality measurement result not satisfying a condition;
the second communication node being out of synchronization;
completing inventory;
within a period of time, not receiving signaling sent by the third communication node; or
receiving an indication of fifth signaling.

12. The communication method of claim 10, wherein the second condition comprises at least one of the following:
sending a scheduling request;
sending message 1;
sending message A;
performing random access;
sending a buffer status report; or
sending sixth signaling.

13. The communication method of claim 2 or 3, wherein the first time period is periodic, semi-persistent, or aperiodically triggered.

14. The communication method of claim 1, further comprising:
communicating with the second communication node within a window according to a first configuration; and
communicating with the second communication node outside the window according to a second configuration.

15. The communication method of claim 1, further comprising:
communicating with the third communication node within a window; and
stopping communication with the third communication node outside the window.

16. The communication method of claim 14 or 15, wherein
configuration information of the window is indicated by signaling, or preconfigured, or predefined.

17. The communication method of claim 15, wherein communicating with the third communication node within the window comprises:
receiving or sending data within the window according to a configured resource position.

18. The communication method of claim 17, wherein the configured resource position comprises at least one of the following:
a configured search space;
a configured control resource set;
configured semi-persistent scheduling;
a configuration of a configured grant;
a configured channel state information reference signal;
a configured channel sounding reference signal;
a configured physical uplink control channel;
a configured downlink control signaling format; or
a configured synchronization signal block.

19. The communication method of claim 15, after stopping communication with the third communication node outside the window, further comprising:
communicating with the second communication node outside the window.

20. The communication method of claim 15, after communicating with the third communication node within the window, further comprising:
stopping all communication with the second communication node; or
maintaining partial communication with the second communication node.

21. The communication method of claim 2 or 20, further comprising:
in response to maintaining partial communication with the second communication node, receiving first-type downlink signaling sent by the second communication node and/or sending first-type uplink signaling to the second communication node.

22. The communication method of claim 21, wherein
the first-type downlink signaling comprises at least one of the following:
a synchronization signal block;
a system information block;
a specific system information block;
paging downlink control signaling; or
a paging physical downlink shared channel; and
the first-type uplink signaling comprises at least one of the following:
message 1;
message A;
a scheduling request;
signaling related to random access information; or
a periodic channel state information report.

23. The communication method of claim 15, wherein the window appears periodically according to a period of the window.

24. The communication method of claim 1, further comprising:
in response to the second signaling conflicting with first uplink signaling, comparing a priority level of the second signaling and a priority level of the first uplink signaling to determine signaling with a higher priority level; and sending the signaling with the higher priority level;
wherein the first uplink signaling is uplink signaling sent when the first communication node communicates with the second communication node.

25. The communication method of claim 1, further comprising:
in response to third signaling conflicting with first downlink signaling, comparing a priority level of the third signaling and a priority level of the first downlink signaling to determine signaling with a higher priority level; and monitoring or receiving the signaling with the higher priority level;
wherein the first downlink signaling is downlink signaling sent when the first communication node communicates with the second communication node.

26. The communication method of claim 1, wherein the information for communication with the third communication node comprises at least one of the following:
inventory information;
scheduling information;
access information;
wake-up information;
indication information for activating the first communication node as an intermediate node;
a start time of communication between the first communication node and the third communication node;
resources for communication between the first communication node and the third communication node;
indication of a waveform or modulation scheme of transmission from the first communication node to the third communication node;
a number of repetitions of transmissions from the first communication node to the third communication node;
a frequency-domain position of transmission from the first communication node to the third communication node; or
a power indication of transmission from the first communication node to the third communication node.

27. The communication method of claim 1, further comprising:
receiving third signaling fed back by the third communication node; and
sending fourth signaling to the second communication node, wherein the fourth signaling is related to the third signaling.

28. The communication method of claim 27, wherein
the third signaling is sent by the third communication node by using a backscatter or amplitude shift keying method.

29. The communication method of claim 1, wherein
the second signaling is sent using an amplitude shift keying method.

30. The communication method of claim 1, wherein
the first signaling is sent by the second communication node through at least one of the following:
a non-access stratum message, a radio resource control message, downlink control information, a media access control control element, layer-1 signaling, or small data signaling.

31. A communication method, applied to a second communication node, comprising:
sending first signaling to a first communication node, wherein the first signaling comprises information for communication between the first communication node and a third communication node.

32. The communication method of claim 31, further comprising:
after satisfying a first condition, performing at least one of the following operations:
stopping all communication with the first communication node;
stopping sending part of downlink control information;
stopping sending part of measurement reference signals;
stopping receiving part of measurement result reports;
stopping sending the downlink control information;
stopping sending the measurement reference signals;
stopping receiving the measurement result reports; or
maintaining partial communication with the first communication node.

33. The communication method of claim 31, further comprising:
communicating with the first communication node within a window by using a first configuration; and
communicating with the first communication node outside the window by using a second configuration.

34. The communication method of claim 32, further comprising:
in response to maintaining partial communication with the first communication node, sending first-type downlink signaling to the first communication node and/or receiving first-type uplink signaling sent by the first communication node.

35. The communication method of claim 34, wherein
the first-type downlink signaling comprises at least one of the following:
a synchronization signal block;
a system information block;
a specific system information block;
paging downlink control signaling; or
a paging physical downlink shared channel; and
the first-type uplink signaling comprises at least one of the following:
message 1;
message A;
a scheduling request;
signaling related to random access information; or
a periodic channel state information report.

36. The communication method of claim 31, further comprising:
receiving fourth signaling sent by the first communication node, wherein the fourth signaling comprises information returned by the third communication node.

37. The communication method of any one of claims 31 to 36, wherein
the first signaling is sent through at least one of the following: a non-access stratum message, a radio resource control message, downlink control information, a media access control control element, layer-1 signaling, or small data signaling.

38. A communication apparatus, applied to a first communication node, comprising:
a first signaling receiving module configured to receive first signaling sent by a second communication node, wherein the first signaling comprises signaling for communication with a third communication node; and
a second signaling sending module configured to send second signaling to the third communication node, wherein the second signaling is related to the first signaling.

39. A communication apparatus, applied to a second communication node, comprising:
a first signaling sending module configured to send first signaling to a first communication node, wherein the first signaling comprises information for communication between the first communication node and a third communication node.

40. A communication node, comprising a memory, a processor, a program stored in the memory and executable on the processor, and a data bus for implementation of connection and communication between the processor and the memory, wherein when executed by the processor, the program causes the processor to perform the communication method of any one of claims 1 to 37.

41. A storage medium configured for computer-readable storage, wherein the storage medium stores one or more programs executable by one or more processors to cause the one or more processors to perform the communication method of any one of claims 1 to 37.

42. A computer program product, comprising a computer program which, when executed by a processor, causes the processor to perform the communication method of any one of claims 1 to 37.
